# FASCICULE DE BREVET EUROPEEN

(11) **EP 4 452 674 B1**
(45) Date de publication et mention de la délivrance du brevet: **18.03.2026**
(21) Numéro de dépôt: 22839796.4
(22) Date de dépôt: 19.12.2022
(51) Int. Cl.: B60C 23/04, B29D 30/00

(54) **ORGANE ELECTRONIQUE ET DISPOSITIF DE RETENUE ELASTIQUE**
ELEKTRONISCHES ELEMENT UND ELASTISCHE HALTEVORRICHTUNG
ELECTRONIC MEMBER AND ELASTIC RETAINING DEVICE

(30) Priorité: 23.12.2021 FR 2114314
(43) Date de publication de la demande: 30.10.2024
(73) Titulaire: COMPAGNIE GENERALE DES ETABLISSEMENTS MICHELIN, 63000 Clermont-Ferrand (FR)
(72) Inventeur: FAGOT-REVURAT, Lionel, 63040 CLERMONT-FERRAND CEDEX 09 (FR); CARTERON, Francis, 63370 LEMPDES (FR)
(74) Mandataire: M.F.P. Michelin
(86) Numéro de dépôt international: PCT/EP2022/086596
(87) Numéro de publication internationale: WO 2023/117866

(56) Documents cités:
- US-A1- 2020 031 178

## Description

### Domaine de l'invention

La présente invention concerne les organes électroniques destinées à être monté par l'intermédiaire d'un dispositif de retenue sur une enveloppe pneumatique dans le but de véhiculer des informations d'identification sur l'enveloppe pneumatique ou des paramètres physiques de l'enveloppe pneumatique mesurés par l'organe électronique au cours de la vie de l'enveloppe pneumatique.

### Arrière-plan technologique

Le développement des objets électroniques dans les enveloppes pneumatiques permet de rendre connectables et connectées les enveloppes pneumatiques, ce qui provoque le développement de nouveaux services afin d'optimiser, par exemple, l'usage de l'enveloppe pneumatique. Or ces organes électroniques comportent parfois des composants fragiles thermo mécaniquement ce qui nécessite d'introduire l'organe électronique en post fabrication de l'enveloppe pneumatique. De plus, afin de ne pas détériorer l'organe électronique au cours de l'usage de l'enveloppe pneumatique, l'introduction d'un dispositif de fixation comme interface entre l'organe électronique et le pneumatique à émerger. Ces dispositifs de fixation sont généralement élastiques pour ne pas contraindre fortement l'enveloppe pneumatique, pour suivre les fortes déformations subies par l'enveloppe pneumatique au cours de son usage et pour amortir les sollicitations transmises à l'organe électronique. L'une des conceptions de dispositif les plus usuellement employées est un patch présentant une semelle servant de fixation à l'enveloppe pneumatique et muni d'une paroi fermée sur elle-même s'étendant depuis la semelle jusqu'à une ouverture. La paroi sert à saisir ou maintenir l'organe électronique en position au sein du dispositif, l'organe électronique étant monté serré à l'intérieur de la paroi qui se déforme élastiquement. L'ouverture autorise l'insertion et l'extraction de l'organe électronique du patch grâce à l'élasticité du matériau de 1 ouverture.

Un organe électronique et un dispositif de retenue sont connus du document US2020031178 A1.

Le document illustre un patch de cette nature. Tout d'abord ce type de patch ne facilité pas l'insertion ou l'extraction de l'organe électronique du fait du montage serré de l'organe électronique au sein du patch. Ainsi, il est difficile de dimensionner un outillage automatique d'insertion ou d'extraction de l'organe électronique au sein du dispositif de fixation monté sur enveloppe pneumatique qui soit à la fois bon marché et efficace en raison de la dispersion de fabrication du patch, de l'organe électronique et du montage serré de l'organe électronique dans le patch qui est indispensable. De plus, sous forte sollicitation de l'enveloppe pneumatique, la mesure des paramètres physiques effectuées par l'organe électronique peut être erronée en raison d'un échauffement excessif du patch. Ainsi, les mesures effectuées sont non opérationnelles même en présence d'une procédure de correction des mesures notamment lors des phases transitoires qui apparaissent lors de la mise en dérive ou en carrossage de l'enveloppe pneumatique ou des phases de freinage ou de fortes accélérations de l'enveloppe pneumatique. Enfin cet échauffement du patch conduit aussi à réduire son endurance mécanique et par conséquent sa durée de vie. Ainsi, l'extraction de l'organe électronique du dispositif de fixation est primordiale car la durée de vie de l'organe électronique est supérieure à celle de l'enveloppe pneumatique et/ou celle du patch.

Les objets de l'invention qui vont suivre ont pour objectif de résoudre les problèmes d'insertion et d'extraction de l'organe électronique qui soit à la fois économique, fiable et sans impact fort sur l'endurance du patch

### Description de l'invention

L'invention porte sur un arrangement d'un organe électronique et d'un dispositif de retenue apte à être fixé à une paroi d'une enveloppe pneumatique, le dit dispositif de retenue comprenant :
- une semelle apte à être fixée à la paroi de l'enveloppe pneumatique par l'intermédiaire d'une surface externe,
- une paroi de maintien fermée, apte à retenir le dit organe électronique, s'étendant depuis la semelle jusqu'à un bord libre et définissant avec ladite semelle un volume ouvert,
- ledit volume, apte à accueillir au moins une partie dudit organe électronique, étant défini par une surface interne de ladite semelle et par une surface interne de ladite paroi de maintien, présentant une ouverture délimitée par le bord libre de ladite paroi de maintien, apte à se déformer pour introduire ou extraire ledit organe électronique dudit volume.

Le dispositif de retenue élastique comprend:
- un émetteur radioélectrique couplé à au moins une antenne radioélectrique ;
- un microprocesseur situé sur un circuit imprimé, couplé à l'émetteur radioélectrique et alimenté par une source d'énergie,
- un espace mémoire connecté au microprocesseur pour stocker au moins une information d'identification, et
- lesdits éléments sont encapsulés dans un boitier de protection définissant une surface extérieure circonscrite dans un cylindre dont l'axe de révolution est perpendiculaire au plan médian du circuit imprimé et délimité par deux plans parallèles ;
le dit boitier de protection comporte sur sa surface la plus radialement extérieure par rapport à l'axe de révolution au moins un sillon s'étendant depuis une première extrémité qui est une extrémité de la surface la plus radialement extérieure proximale de l'un des deux plans parallèles et sur une partie de la hauteur du cylindre jusqu'à une seconde extrémité, préférentiellement la seconde extrémité du au moins un sillon est une extrémité de la surface la plus radialement extérieure proximale de l'autre plan parallèle **et** l' espace libre définie par la différence entre le volume du dispositif de retenue et la surface extérieure du boîtier de protection de l'organe électronique comprenant le au moins un sillon s'étend continument depuis la surface interne de la semelle du dispositif de retenue jusqu'au bord libre de la paroi de maintien du dispositif de retenue.

L'organe électronique présente, par l'intermédiaire du sillon sur la surface la plus radialement extérieure, un conduit fluidique entre l'extérieur lorsque l'organe électronique est monté dans un dispositif de retenue et la cavité fluidique restante après l'insertion de l'organe électronique au sein du dispositif de retenue. En effet, l'extension du sillon le long d'une partie de la surface radialement extérieure du boîtier de protection jusqu'à une surface libre de l'organe électronique assure la connexion fluidique. Ainsi, lors de la phase d'insertion de l'organe électronique, la réduction du volume de la cavité fluidique ne crée par de surpression dans cette cavité par l'équilibre des pressions avec l'extérieur. Par conséquent, la pression qui s'exerce sur l'organe électronique lors de son insertion dans le volume ouvert est constante ce qui limite les efforts d'insertion et les rend plus facilement évaluables pour la conception d'un outil automatisé d'insertion. De plus, ces efforts d'insertion sont aussi moins importants par la présence du sillon ce qui permet de définir un outillage d'insertion robuste et économique.

De même lors de la phase d'extraction de l'organe électronique, l'équilibre des pressions entre la cavité restante à l'intérieur du dispositif de retenue et l'extérieur du dispositif de fixation assure de ne pas créer une dépression entre ces deux milieux fluidiques. Ainsi, aucune force supplémentaire ne s'exerce sur l'organe électronique lors de l'étape d'extraction de l'organe électronique. De ce fait, le dimensionnement de l'outillage d'extraction est plus robuste et meilleur marché car les efforts d'extraction à exercer par cet outillage est moindre en raison de la présence du sillon.

Enfin, lors de fortes sollicitations de l'enveloppe pneumatique en condition d'usage sévère comme la mise en dérive, en carrossage de l'enveloppe pneumatique ou les phases transitoires de freinage et d'accélération, tout mouvement de l'organe électronique au sein du dispositif de fixation ou de déformation du dispositif de fixation ne génère pas de surpression ou dépression par rapport à la pression extérieure, comme par exemple au sein de la cavité interne de l'ensemble monté constitué par l'enveloppe pneumatique et la roue, du fait de la présence de ce sillon qui équilibre à tout instant le pression entre les deux espaces fluidiques. De ce fait, aucun échauffement supplémentaire n'apparait dans la cavité restante ce qui limite fortement les variations des paramètres physiques des capteurs de l'organe électronique au cas où celui-ci en est équipé et d'autre part limite les efforts transmis à l'organe électronique, ce qui améliore son endurance mécanique.

Ainsi, on assure que la connexion fluidique s'opère entre l'extérieure de l'arrangement et le volume fluidique restant dans le volume du dispositif de retenue lorsque l'organe électronique est introduit à l'intérieur de ce volume.

Quel que soit la conception du dispositif de retenue et notamment de l'implantation de l'organe électronique au sein du volume, la connexion fluidique existe. Si l'organe électronique est partiellement introduit dans le volume, la seconde extrémité du sillon doit se situer au-delà du bord libre de la paroi de maintien du dispositif de retenue.

Si l'organe électronique est entièrement introduit dans le volume du dispositif de retenue et que la paroi de maintien recouvre partiellement la surface axialement extérieure du boîtier de protection de l'organe électronique, il faut que la seconde extrémité du sillon se situe au-delà du bord libre de la paroi de maintien ou qu'une partie du canal principal sur la surface axialement extérieure du boitier de protection s'étend au-delà du bord libre de la paroi de maintien pour déboucher au niveau de l'ouverture du dispositif de retenue.

Dans l'hypothèse où l'organe électronique est introduit en totalité dans le dispositif de retenue, il convient que la seconde extrémité du sillon débouche en dehors du dispositif de retenue, ce qui sera assurée par la condition préférentielle sur la seconde extrémité du sillon.

En conclusion, la présence de ce sillon répond à la problématique soulevée. D'autres solutions existent pour créer cette connexion fluidique entre l'extérieur du dispositif de fixation et la cavité restante comme par exemple, un orifice traversant la paroi de maintien et/ou la semelle du dispositif de retenue. Cependant ces solutions créent des zones de fissuration appropriées au sein du dispositif de fixation ce qui est néfaste à l'endurance du dispositif de fixation. De plus, un conduit fermé est plus facilement refermable qu'un sillon par nature ouvert, notamment pour des matériaux élastiques dont est constituée généralement le dispositif de fixation ce qui peut rendre inefficace l'équilibre des pressions. Enfin, le dispositif de fixation est généralement une pièce moulée ce qui la rend bon marché comme le procédé de moulage par injection. La création de sillon sur une partie de la surface radialement extérieure du boîtier de protection est aisée à réaliser par d'une part le procédé de moulage par injection en introduisant une forme miroir en saillie sur l'une des deux coquilles du moule et d'autre part par un procédé d'usinage du boitier de protection. Un orifice traversant nécessite une étape supplémentaire de création de l'orifice post moulage du corps du dispositif de fixation ce qui est plus onéreux.

Avantageusement, le boîtier de protection comprend sur sa surface la plus radialement extérieure N sillons, N étant un nombre entier supérieur ou égal à 2.

Le fait de multiplier les sillons permet de répartir le volume de vide de la surface la plus radialement extérieure du boitier de protection et de la paroi de maintien du dispositif de retenue, ce qui permet de s'affranchir de toute forte réduction de la section utile du sillon ce qui rendrait plus difficile l'équilibrage dynamique des pressions contrairement au cas d'un unique sillon. De ce fait, la multiplication des sillons permet de diminuer les efforts d'insertion et d'extraction s'exerçant sur l'organe électronique et sur la paroi de maintien ce qui assure une meilleure tenue mécanique du dispositif de fixation et de l'organe électronique.

Selon un mode de réalisation particulier, les N sillons sont également répartis le long du contour défini par la surface la plus radialement extérieure du boîtier de protection.

Une répartition de façon équitable des sillons sur le contour renforce l'homogénéité des efforts d'insertion et d'extraction au niveau de la surface radialement extérieure du boîtier de protection et de la paroi de maintien, ce qui assure un serrage homogène de l'organe électronique par la paroi de maintien et ce qui assure une meilleure endurance de l'organe électronique et du dispositif de fixation.

Selon un mode de réalisation très particulier, le au moins un sillon présent, dans un plan perpendiculaire à la direction du sillon une largeur minimale au niveau de la surface la plus radialement extérieure du boîtier de protection supérieure ou égale à la profondeur minimale du au moins un sillon.

Cette forme de sillon, quelle que soit la géométrie de la section du sillon : carré, rectangulaire, triangulaire, quadrilatère, demi circulaire, elliptique assure d'avoir un sillon. De plus, le boitier de protection étant rigide, le fait d'assurer que la largeur est plus grande que la profondeur permet de minimiser l'épaisseur du boîtier de protection contrairement à une conception ou la profondeur du sillon serait plus grande que la largeur ce qui réduit la masse de ce boitier.

Selon un mode de réalisation spécifique, le au moins un sillon présente une section minimale dans le plan perpendiculaire à la direction du sillon d'au moins 0,04 mm2, préférentiellement d'au moins 0,09 mm2.

Cette section minimale assure que même sous très fortes sollicitations thermomécaniques potentiellement rencontrées en usage routier, la section du sillon ne se refermera pas ce qui est préférable à l'endurance du dispositif et de l'organe électronique. De même, selon le nombre de sillons disponibles et les sections minimales de ces sillons, cette section minimale par sillon définit une section utile minimale de débit fluidique au travers du réseau de sillons latéraux. Ce débit fluidique définit les caractéristiques de rigidité du système fluidique à une sollicitation d'insertion et d'extraction de l'organe électronique qui pilote en partie le couple constitué de la vitesse de déplacement relatif de l'organe électronique par rapport au dispositif de fixation et de l'effort extérieur à appliquer pour faire coulisser l'organe électronique dans le volume ouvert. Le fait que le boitier de protection soit rigide par rapport à la paroi de maintien du dispositif de retenue permet d'avoir des sections de sillon aussi faibles.

Selon, un second mode de réalisation, la surface la plus axialement extérieure du boîtier de protection, proximale de la première extrémité du au moins un sillon, se situant du côté de la première extrémité de la surface la plus radialement extérieure, présente au moins un canal principal s'étendant depuis le au moins un sillon, préférentiellement, chaque surface la plus axialement extérieure du boitier de protection présente au moins un canal principal s'étendant depuis le au moins un sillon.

Ce canal principal permet de constituer un volume de fluide minimal dans la cavité restante lorsque l'organe électronique est inséré dans le dispositif de retenue, en particulier lorsque l'une des surfaces axialement extérieures de l'organe électronique vient en contact avec le dispositif de retenue. En effet la surface axialement extérieure est une surface d'appui de l'organe électronique qui est souvent plane pour des raisons pratiques alors que la surface interne du dispositif de retenue accueillant l'organe électronique suit la courbure de l'enveloppe pneumatique. Cette courbure de l'enveloppe pneumatique est évolutive au tour de roue en condition d'usage en particulier par la présence de l'aire de contact qui représente la surface de contact entre l'enveloppe et le sol. De ce fait, il est possible d'emprisonner du fluide entre la surface interne du dispositif de retenue et la surface d'appui de l'organe électronique. En étant en connexion fluidique avec l'extérieur par l'intermédiaire du sillon auquel il est j oint, on assure l'équilibre des pressions entre l'extérieur du dispositif de fixation comprenant l'organe électronique et la cavité fluidique restante au niveau de la surface interne du dispositif de retenue. De plus, ce volume minimal permet de piloter la rigidité du piston fluidique du sillon en constituant une réserve de fluide. Plus cette réserve est importante, moins la rigidité du sillon est forte, indépendamment de la section minimale du sillon.

Dans le cas où l'organe électronique est totalement positionné à l'intérieur du dispositif de retenue, il est préférentiel qu'un second canal principal se situe sur la seconde surface axialement extérieure du boitier de protection se situant au droit de l'ouverture du dispositif de retenue servant à l'insertion et/ou l'extraction de l'organe électronique dans le dispositif de retenue. Ce second canal principal a pour but de connecter de manièrre fluidique l'extérieur du dispositif de retenue avec la cavité fluidique restante au sein du dispositif de retenue lorsque l'organe électronique est présent dans le dispositif de retenue.

Avantageusement, le boitier de protection comprend, sur la surface la plus axialement extérieure, N canaux principaux, N étant un nombre entier supérieur ou égal à 2.

Le fait de multiplier les canaux principaux permet de répartir le volume de vide sur la totalité de la surface interne du dispositif de retenue, ce qui permet de s'affranchir de toute maladresse lors des phases d'insertion ou d'extraction qui conduirait à mal positionner l'organe électronique au sein du volume ouvert pouvant même partiellement obstruer un canal principal ce qui empêcherait d'équilibrer efficacement les pressions en cas d'unicité du canal principal. De plus, la multiplication des canaux principaux permet de répartir potentiellement les débits fluidiques au travers des sillons si la surface radialement extérieure du boitier de protection est équipée de plusieurs sillons. Ainsi, l'insertion et l'extraction de l'organe électronique dans le volume ouvert du dispositif de retenue est facilité ce qui assure une meilleure tenue mécanique du dispositif de fixation et assure un serrage homogène de l'organe électronique par le dispositif de retenue.

Spécifiquement, les N canaux principaux délimitent la surface la plus axialement exterieure (14) du boitier de protection (12) en au moins N+1 surfaces égales.

Si les canaux principaux sont disjoints les uns des autres, il est préférable de les répartir équitablement sur la totalité de la surface la plus axialement extérieure du boitier de protection afin de répartir équitablement le volume de vide sur cette surface.

Si les N canaux principaux sont tous disjoints les uns des autres, il est préférable de les répartir sur la totalité de la surface la plus axialement extérieure du boîtier de protection afin de répartir équitablement cette surface. Alors, la surface la plus axialement extérieure du boîtier de protection est découpée en N+1 surfaces égales. Si, les canaux principaux se coupent entre eux, les surfaces obtenues après découpages sont égales et leur nombre est nécessairement supérieure à N+1. Par exemple, si les N canaux principaux se coupent en un unique point géométrique, la surface la plus axialement extérieure du boîtier de protection est découpée en 2*N surfaces délimités par deux canaux différents. Découper la surface la plus axialement extérieure du boîtier de protection en sous surface égales par l'intermédiaire des canaux principaux minimise le risque de dysfonctionnement du circuit fluidique par l'obstruction de certains sillons ou canaux principaux lorsque l'organe électronique est présent au sein du dispositif de retenue , notamment au cours des phases d'insertion et d'extraction de l'organe électronique, en condition d'usage sur pneumatique par exemple.

Très avantageusement le au moins un canal principal présente, dans un plan perpendiculaire à la direction du canal principal, une largeur minimale au niveau de la surface la plus axialement extérieure du boitier de protection supérieure ou égale à la profondeur minimale du canal principal.

Cette forme de canal principal, quelle que soit la géométrie de la section du canal principal ; carré, rectangulaire, triangulaire, quadrilatère, demi circulaire, elliptique assure d'avoir un canal principal opérationnel à la circulation fluidique

De plus, le boitier de protection étant rigide, le fait d'assurer que la largeur est plus grande que la profondeur permet de minimiser l'épaisseur du boîtier de protection contrairement à une conception ou la profondeur du canal principal serait plus grande que la largeur ce qui réduit la masse de ce boitier.

Préférentiellement le au moins un canal principal présente une section minimale dans le plan perpendiculaire à la direction du canal principal d'au moins 0,04 mm2, préférentiellement d'au moins 0,09 mm2.

La semelle du dispositif de retenue en contact avec le pneumatique doit suivre la courbure de l'enveloppe pneumatique qui est évolutive au tour de roue. Pour satisfaire cette condition la semelle est souvent faite en matériaux élastique qui se déforme fortement sous sollicitations thermomécaniques. L'efficacité du volume de vide crée par le canal principal dépend de la capacité du canal principal à ne pas être obstruer sous ces fortes sollicitations thermomécaniques au cours de l'usage de l'enveloppe pneumatique afin de ne pas créer de surpression ou un échauffement de la matière qui est néfaste à l'endurance du dispositif de fixation et à l'organe électronique.

Cette section minimale assure que même sous très fortes sollicitations thermomécaniques potentiellement rencontrées en usage routier, la section du canal principal ne se refermera pas ce qui est préférable à l'endurance du dispositif et de l'organe électronique. De même selon le nombre de canaux principaux disponibles et les sections minimales de ces canaux principaux, cette section minimale par canal principal définit le volume minimal de fluide au travers du réseau de canaux principaux. Ce volume minimal permet de piloter la rigidité du piston fluidique constitué par le sillon, ou le réseau de sillons en constituant une réserve de fluide. Plus cette réserve est importante, moins la rigidité du sillon est faible, indépendamment de la section minimale du sillon.

Selon un troisième mode de réalisation, le boitier de protection comprend sur la surface la plus axialement extérieure au moins un canal secondaire reliant entre eux deux canaux principaux disjoints.

Dans le cas où les canaux principaux présents sur la surface axialement extérieure du boitier de protection sont disjoints, il convient afin de faciliter l'écoulement fluidique de relier les canaux principaux disjoints par des canaux secondaires ce qui assure un équilibre des pressions entre l'extérieur et la cavité restante lorsqu'un canal principal est obstrué et en cas de fractionnement de la cavité fluidique restante. De même, cela augmente le volume utile de la cavité restante ce qui diminue la rigidité du système fluidique des sillons latéraux.

Avantageusement, le au moins un canal secondaire présente, dans un plan perpendiculaire à la direction du canal secondaire une largeur minimale au niveau de la surface la plus axialement extérieure du boîtier de protection supérieure ou égale à la profondeur minimale du canal secondaire, préférentiellement la section minimale, définie par la largeur minimale et la profondeur minimale du au moins un canal secondaire, est d'au moins 0,04 mm2.

Afin d'éviter une obstruction du canal secondaire sous fortes sollicitations thermomécaniques en condition d'usage de l'enveloppe pneumatique, il est préférable de dimensionner la forme de la section du canal secondaire ainsi que préférentiellement la surface de cette section pour éviter toute obstruction en condition d'usage sur une enveloppe pneumatique par exemple.

Selon un mode de réalisation très particulier, le au moins un sillon présente un rayon de courbure supérieure ou égale à 0,05 millimètre.

Selon un mode de réalisation très particulier, le au moins un canal principal présente un rayon de courbure supérieure ou égale à 0,05 millimètre.

Selon un mode de réalisation très particulier, le au moins un canal secondaire présente un rayon de courbure supérieure ou égale à 0,05 millimètre.

Cela évite lorsque le sillon et/ou le canal principal et/ou le canal secondaire présente une section de type quadrilatère des phénomènes de concentrations de contraintes qui sont toujours néfaste à l'endurance de l'organe électronique et en particulier du boîtier de protection qui est une zone de fortes sollicitations mécaniques lors des phases d'insertion et d'extraction de l'organe électronique.

Avantageusement, ladite paroi de maintien du dispositif de retenue présente sur la surface interne au moins un canal s'étendant depuis la surface interne de la semelle jusqu'au bord libre, préférentiellement, au moins une partie du au moins un canal du dispositif de retenue se situe en vis-à-vis du au moins un sillon de l'organe électronique.

Dans le cas où le dispositif de retenue présente un canal sur la surface interne de la paroi de maintien depuis la surface interne de la semelle du dispositif de retenue jusqu'au bord libre de la paroi de maintien, un canal fluidique additionnel se crée entre l'extérieur et la cavité fluidique restante. Ainsi, on augmente le débit fluidique entre l'intérieur et l'extérieur de l'arrangement. Si les divers canaux ne coïncident pas, on ne modifie les propriétés de rigidité de chaque canal.

Dans un mode de réalisation préférentiel, le canal de la paroi de maintien coïncide avec le sillon de la surface extérieure du boitier de protection de l'organe électronique. De ce fait, la section du creux est augmentée ce qui modifie les propriétés de rigidité du canal fluidique total. L'augmentation de la section du canal fluidique a pour avantage de diminuer la rigidité du ressort pneumatique équivalent ce qui limite encore plus les efforts d'insertion et d'extraction de l'organe électronique

L'invention porte aussi sur un ensemble comprenant un arrangement selon l'invention d'un organe électronique et d'un dispositif de retenue apte à être fixé à une paroi d'une enveloppe pneumatique et une enveloppe pneumatique, comprenant un sommet (S), deux flancs (F) s'étendant depuis le sommet (S) et se terminant par deux bourrelets (B) aptes à être liés à une roue, dans lequel le dispositif de retenue est fixé sur l'une des surfaces de l'enveloppe pneumatique, préférentiellement sur la surface radialement intérieure de l'enveloppe pneumatique.

Très préférentiellement , le dispositif de retenue est fixé sur la surface radialement intérieure du pneumatique et au droit du sommet (S) de l'enveloppe pneumatique.

La destination principale de l'organe électronique est l'association de celui-ci avec une enveloppe pneumatique par l'intermédiaire d'un dispositif de retenue en positionnant le dispositif de retenue sur une surface de l'enveloppe pneumatique. De manière préférentielle, le dispositif de fixation est lié à la surface délimitant la cavité fermée constituée par l'enveloppe pneumatique et la roue lorsque l'enveloppe pneumatique est montée sur la roue, ce qui assure une protection de l'organe électronique par rapport aux agressions extérieures au pneumatique qu'elles soient mécaniques ou chimiques comme des chocs sur les trottoirs ou des projections de fluide de toute nature. Avantageusement, le dispositif de retenue est fixé sur la paroi interne du pneumatique au droit du sommet ce qui facilité le montage de l'enveloppe pneumatique équipé de l'arrangement sur une roue. On entend ici par l'expression « au droit » que l'étendue axiale , selon l'axe naturel de rotation du pneumatique, du dispositif de retenue est compris dans l'étendue axiale du somet du pneumatique. De plus, la mesure de certains paramètres du sommet comme sa déformation par l'organe électronique permet de recueillir des paramètres physiques utiles sur l'usage du pneumatique ce qui est aussi une fonction recherchée par les enveloppes pneumatiques connectées. Ces paramètres physiques peuvent être par exemple, l'accélération radiale ou longitudinale du sommet afin de déterminer la forme de l'aire de contact représentant le contact entre l'enveloppe pneumatique en condition monté, chargé et le sol voire la quantité d'eau en condition d'hydroplanage.

### Description brève des dessins

L'invention sera mieux comprise à la lecture de la description qui va suivre donnée uniquement à titre d'exemple non limitatif et faite en se référant aux figures annexées dans lesquelles les mêmes numéros de référence désignent partout des parties identiques et dans lesquelles :
- La Fig. 1 présente une vue en perspective d'un organe électronique, apte à être fixé à un pneumatique par l'intéermédire d'un dispositif de retenue, de l'état de l'art;
- La Fig. 2 présente une vue en perspective d'un organe électronique de l'arrangement selon un premier mode de réalisation de l'invention ;
- La Fig. 3 présente une vue en perspective d'un organe électronique de l'arrangement dans un second mode de réalisation de l'invention comprenant un canal principal ;
- La Fig. 4 présente une vue en perspective d'un organe électronique de l'arrangement dans un second mode de réalisation avantageux selon l'invention ;
- La Fig. 5 présente une vue en perpective et en coupe d'une enveloppe pneumatique équipé d'un organe électonique logé dans un dispositif de fixation selon l'invention ;
- La Fig 6 présente une vue en perspective d'un dispositif de retenue d'un organe électronique à un pneumatique de l'état de l'art.

### Description détaillée de modes de réalisation

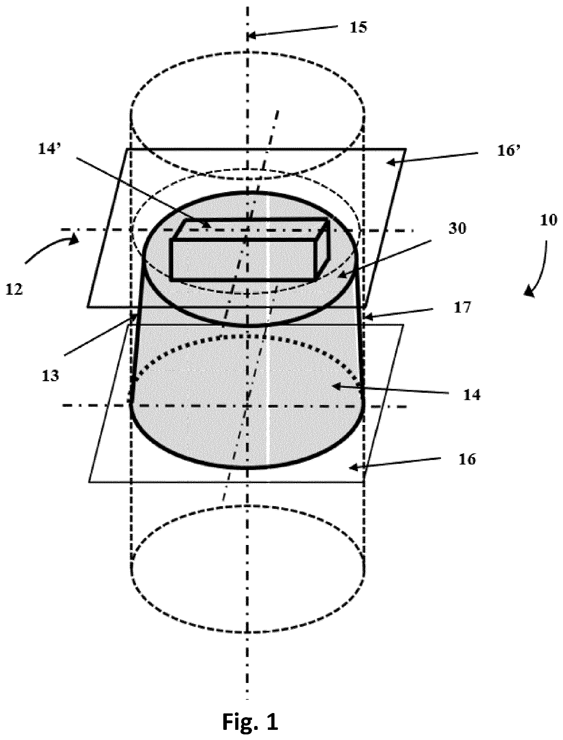

La Fig. 1 est une vue en perspective d'un organe électronique 10, apte à être fixé à l'aide d'un dispositif de retenue à une enveloppe pneumatique, de l'état de la technique.

L'organe électronique 10, représenté ici en gris, est délimité par un boitier de protection 12 encapsulant l'ensemble des composants électroniques de l'organe électronique 10. Ce boitier de protection 12 présente une surface extérieure 30 circonscrite par un cylindre 17 présentant un axe de révolution 15 qui est perpendiculaire au circuit imprimé de l'organe électronique 10. Ce cylindre 17 est tronqué par deux plans parallèles 16 et 16' qui s'appuient respectivement sur les surfaces les axialement extérieures 14 et 14' du boîtier de protection 12.

Ce boitier de protection 12 se présente comme la combinaison d'un cône et d'un parallélipipède. La forme conique facilite son insertion ou son extraction d'un dispositif de retenue. Le cône présente sur l'une de ses surfaces axialement extérieures un parallèlipipède qui accueille l'antenne radioélectrique. Celle-ci est aussi encapsulée dans le boîtier de protection 12. Le boitier de protection 12 est une pièce monolythique ou une pièce assemblée en plusieurs parties, les parties étant alors soudées entre elles.

Les parties ou la pièce monolythique sont obtenues par exemple à l'aide d'un procédé de moulage à partir d'un matériaux plastique comme un thermodurcissable. La cuisson basse température du plastique aboutit à la confection finale de la surface extérieure 30 du boitier de eprotection 12.

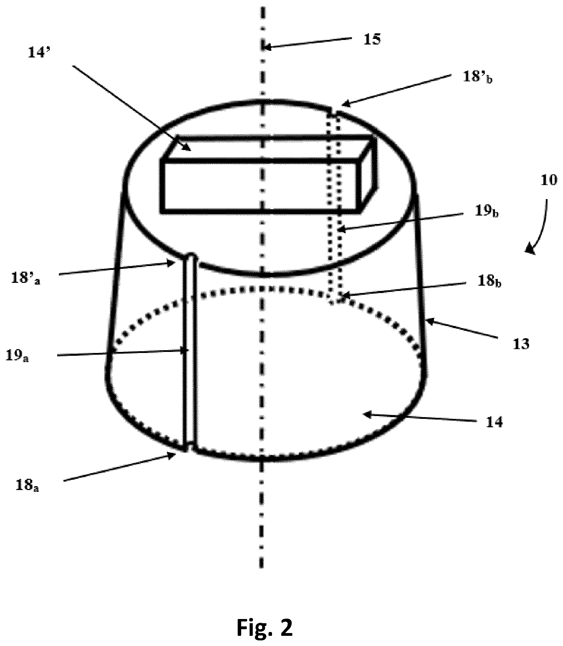

La figure 2 présente un organe électronique 10 selon un premier mode de réalisation de l'invention obtenu à partir l'organe électronique de la Fig. 1. La surface radialement extérieure 13 du boîtier de protection 12 comprend deux sillons 19a et 19b s'étendant depuis la surface la plus axialement extérieure 14 du boîtier de protection 12. Chaque sillon 19ₐ, 19_{b} présente une extrémité, nommées respectivement 18ₐ, et 18_{b}, au niveau de la surface axialement extérieure 14 du boîtier de protection 12. Et chaque sillon 19ₐ, et 19_{b} présente aussi une seconde extrémité, nommée respectivement 18'ₐ, ou 18'_{b}, sur la surface radialement extérieure 13 du boîtier de protection 12 qui est axialement opposé à la première extrémité 18ₐ ou 18_{b}.

Chaque sillon 19a et 19b constitue un conduit fluidique entre l'extérieur du dispositif de retenue acueillant l'organe électronique 10 et l'espace libre de la cavité d'accueil du dispositif de retenue lorsque l'organe électronique 10 est présent dans le dispositif de retenue. On entend par espace libre la différence entre le volume initiale de la cavité d'accueil de l'organe électronique au sein du dispositif de retenue et le volume occupé par l'organe électronique à chaque instant des phases d'insertion ou d'extraction de l'organe électronique dans le dispositif de retenue. Plus cet espace libre est réduit, plus l'effort d'insertion ou d'extraction à exercer sur l'organe électronique est important, en particulier en l'absence de ces sillons 19a et 19b.

Ici, les deux sillons 19a et 19b sont équitablement répartis sur la périphérie de la surface radialement extérieure 13 du boîtier de protection 12, afin de maximiser l'efficacité du système fluidique en minimisant les risques d'obstruction des sillons lorsque l'organe est présent dans le dispositif de retenue. La section de ce sillon est ici de forme demi circulaire, elle pourrait être de forme carré, rectangulaire, ovale ou elliptique, avec un rayon de l'ordre de 0,2 millimètres. La section est ici par construction uniforme, elle pourrait être évolutive et à une valeur de l'ordre de 0,06 millimètre carré. Cette section qui est la section minimale est suffisante pour limiter les efforts d'insertion et d'extraction à des valeurs raisonnable pour un travail manuel par l'homme du métier, en particulier par la présence de deux sillons au lieu d'un seul. De plus, cette section minimale assure la fonction, même en cas d'insertion ou d'extraction imparfaite de l'organe électronique 10 de la cavité d'accueil du dispositif de retenue. En particulier, cela permet de définir l'effort maximal d'extraction ou d'insertion de l'organe électronique 10 du dispositif de retenue dans les cas d'opérations imparfaites, ce qui permet d'une part le dimensionner de façon adéquate l'organe électronique 10 et le dispositif de retenue en termes de résistance mécanique et d'autre part d'automatiser les opérations d'insertion ou d'extraction.

Enfin, l'obtention de ces sillons 19a et 19b est aisée industriellement lorsque l'organe électronique 10 est obtenu par un procédé de moulage. En effet, il suffit d'ajouter, par exemple, dans les matrices du moule du boîtier de protection de l'état de l'art deux baguettes, ici droite de section circulaire, ayant l'image inverse du sillon 19a ou 19b, afin de générer ces sillons 19a et 19b directement lors de l'opération de moulage du boîtier de protection 12. Cela n'ajoute pas de temps de fabrication supplémentaire, les baguettes, qui peuvent être intimement liées aux matrices du moule, servent à la réalisation de plusieurs pièces puisque réutilisables. En cas de section de sillon de forme carré ou elliptique, il convient d'ajouter des rayons de raccordement afin de faciliter le démoulage des organes électroniques 10. De ce fait, la solution technique est économiquement minimale par rapport à la réalisation d'un organe électronique 10 de l'état de l'art. Et mécaniquement, le sillon est obtenu en même temps que le boîtier de protection par le même procédé sans opération ultérieure sur l'organe électronique 10 comme une découpe qui peut le fragiliser. Cela assure une meilleure résistance à l'organe électronique 10 équipé du dit sillon.

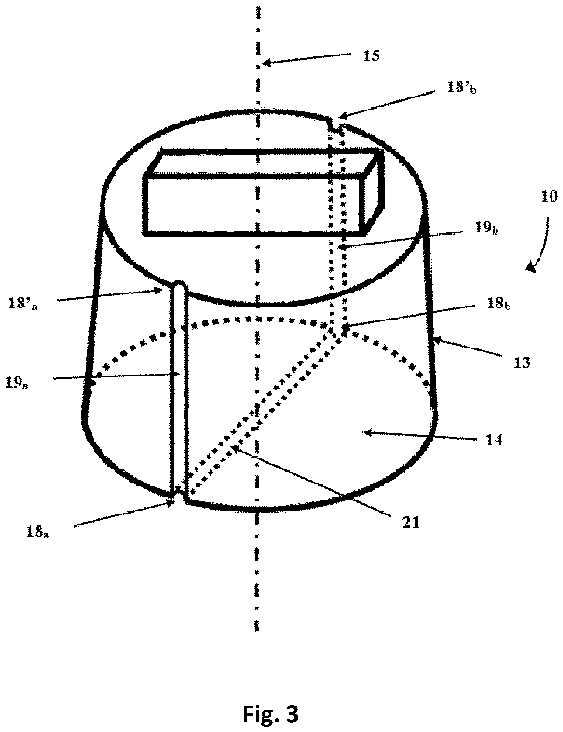

La figure 3 est un exemple d'un organe électronique 10 selon un second mode de réalisation. En plus de la présence de sillons, ici au nombre de deux 19a et 19b, sur la surface la plus radialement extérieure 13 du boîtier de protection 12, la surface la plus axialement extérieure 14 du boîtier de protection 12 où se termine les extrémités 18a et 18b des sillons 19a et 19b présente aussi un canal principal 21.

Ce canal principal 21 débouche à ces deux extrémités dans chacun des sillons 19a et 19b puisque ceux-ci sont diamétralement opposés. Ici les sillons sont équitablement répartis sur la surface la plus radialement exterieure 13 du boîtier de protection 12 qui est de révolution. Et le canal principal 21 est positionné de sorte que la surface la plus axialement extérieure 14 du boîtier de protection 12 soit séparée en deux surfaces quasi égales par le canal principal 21.

Lorsque l'organe électronique 10 est introduit dans le dispositif de retenue de sorte que celui-ci vienne en contact avec la surface la plus axialement extérieure 14 du boîtier de protection 12, ce qui est fréquent, l'espace libre laissé par l'organe électronique 10 dans le volume ouvert 20, ou cavité d'accueil, du dispositif de retenue est réduit voire nul. De ce fait, les efforts d'insertion, respectivement d'extraction, de l'organe électronique 10 sur les derniers instants d'insertion, respectivement dans les premiers instants d'extraction, augmentent grandement malgré la présence des sillons 19a et 19b. La présence du canal principal 21 permet d'une part de créer un volume de vide résiduel pour l'espace libre, ce qui conduit à diminuer fortement les efforts d'insertion ou d'extraction lorsque l'organe électronique 10 a vocation à se positionner jusqu'à la surface la plus axialement extérieure 14 du boîtier de protection 12. Pour être efficace pour le circuit fluidique constitué des sillons 19 a et 19b, il est préférable que ce canal principal 21 débouche dans les sillons 19a et 19b au niveau de la surface la plus axialement extérieure 14 du boîtier de protection 12. Dans une autre configuration, l'organe électronique 10 peut comporter deux canaux principaux s'étendant à ces extrémités sur la surface la plus radialement extérieure 13 du boîtier de protection 12. A l'une seulement de ces extrémités, le canal principal 21 débouche dans un sillon. Et les deux canaux principaux découpent la surface la plus axialement extérieure 14 du boîtier de protection 12 en trois sous surfaces de dimension quasi égales. Ainsi, on offre, statistiquement plus de chances, de trouver un canal principal non obstrué et en connexion fluidique avec l'extérieur par l'intermédiaire d'un sillon même lorsque l'organe électronique 10 est positionné de façon imparfaite dans la cavité d'accueil du dispositif de retenue.

Ici, la section du canal principal 21 est ici de forme demi circulaire, elle pourrait être de forme carré, rectangulaire, ovale ou elliptique, avec un rayon de l'ordre de 0,2 millimètres. La section est ici par construction uniforme, mais elle pourrait être évolutive et à une valeur de l'ordre de 0,06 millimètre carré. Cette section qui correspond à la section minimale est suffisante pour limiter les efforts d'insertion et d'extraction à des valeurs raisonnable pour un travail manuel par l'homme du métier. Cette section minimale peut être plus faible si le nombre de canaux principaux est suffisant pour assurer une volume global satisfaisant dans l'espace libre. En particulier, cela permet de définir l'effort maximal d'extraction ou d'insertion de l'organe électronique 10 du dispositif de retenue dans les cas d'opérations imparfaites, ce qui permet d'une part le dimensionner mécaniquement de façon adéquate l'organe électronique 10 et le dispositif de retenue et d'autre part d'automatiser les opérations d'insertion ou d'extraction.

Cette solution technique est industrialisable en intégrant une forme représentant l'image inverse du canal principal 21 dans l'une des formes du moule du boîtier de protection 12. Ainsi, le canal principal 21 est obtenu en même temps que l'organe électronique 10 sans opération ultérieure sur l'organe électronique 10 comme une découpe qui peut le fragiliser. Cela assure une meilleure résistance à l'organe électronique 10 équipé du dit canal principal 21.

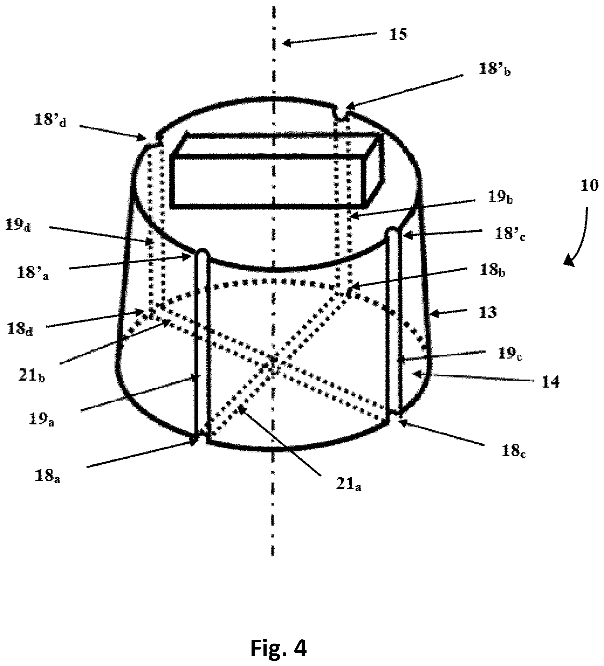

La figure 4 est une vue en perspective d'un organe électronique 10 selon une variante du second mode de réalisation de l'organe électronique 10 de l'invention.

Dans cette variante, la surface la plus axialement extérieure 14 du boîtier de protection 12 comprend deux canaux principaux 21ₐ et 21_{b} qui se coupent entre eux. Ceux-ci délimitent, dans le cas de la Fig. 4, la surface la plus axialement extérieure 14 en quatre sous-espaces égaux. Chaque sous-espace est délimité par les deux canaux principaux 21ₐ et 21_{b} et représente une portion de la surface la plus axialement extérieure 14 du boîtier de protection 12 sur un secteur angulaire de 90 degrés. En effet, l'organe électronique 10 de la Fig. 4 est de révolution autour de son axe de rotation 15.

Chaque canal principal 21ₐ et 21_{b} débouche à chacune de ces extrémités dans un sillon 19ₐ, 19_{b}, 19_{c} et 19_{d}. Ces sillons sont eux-mêmes équitablement répartis sur la surface la plus radialement extérieure 13 du boîtier de protection 12. Ils découpent la surface la plus radialement extérieure 13 en quatre secteurs angulaires égaux de 90 degrés chacun. Ainsi le volume restant ou l'espace libre de la cavité d'accueil, lorsque l'organe électronique est introduit dans un dispositif de retenue, est équitablement réparti géographiquement autour de l'axe de rotation de l'organe électronique 10.

Ici, la section des canaux principaux 21ₐ et 21_{b} est identique et de forme demi circulaire, elle pourrait être de forme carré, rectangulaire, ovale ou elliptique, avec un rayon de l'ordre de 0,165 millimètres. La section est ici par construction uniforme, mais elle pourrait être évolutive, et à une valeur de l'ordre de 0,04 millimètre carré. Cette section qui correspond à la section minimale est suffisante pour limiter les efforts d'insertion et d'extraction à des valeurs raisonnable pour un travail manuel par l'homme du métier. En particulier, cela permet de définir l'effort maximal d'extraction ou d'insertion de l'organe électronique10 du dispositif de retenue dans les cas d'opérations imparfaites, ce qui permet d'une part le dimensionner mécaniquement de façon adéquate l'organe électronique 10 et le dispositif de retenue et d'autre part d'automatiser les opérations d'insertion ou d'extraction.

Cette solution technique est industrialisable en intégrant une forme représentant l'image inverse de chaque canal principal 21ₐ et 21_{b} dans l'une des formes du moule du boîtier de protection. Ainsi, les canaux principaux 21ₐ et 21_{b} sont obtenus en même temps que l'organe électronique 10 sans opération ultérieure sur l'organe électronique 10 comme une découpe qui peut le fragiliser. Cela assure une meilleure résistance à l'organe électronique 10 équipé des dits canaux principaux 21ₐ et 21_{b}.

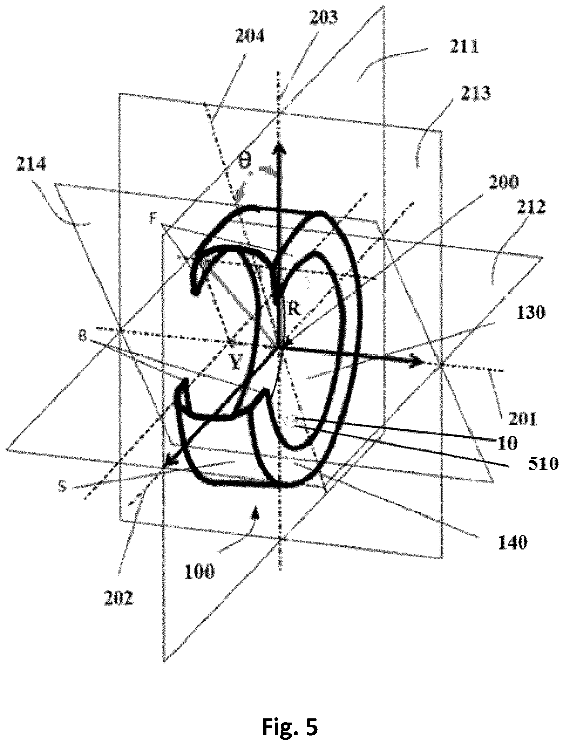

La Fig. 5 présente une coupe d'un bandage pneumatique 100 selon l'invention comprenant un sommet S prolongé par deux flancs F et se terminant par deux bourrelets B. En l'espèce, le pneumatique 100 est destiné à être monté sur une roue qui n'est pas représentée sur cette figure, au niveau des deux bourrelets B. On délimite ainsi une cavité fermée, contenant au moins un fluide sous pression, délimitée à la fois par la deuxième surface radialement intérieure 130 au bandage pneumatique 100 et par la surface externe de la roue. L'enveloppe pneumatique 100 comprend aussi une première surface 140 radialement externe à l'enveloppe pneumatique 100.

On notera l'axe de référence 201 correspondant à l'axe de référence ou axe naturel de rotation du bandage pneumatique 100 et le plan médian 211, perpendiculaire à l'axe de référence 201 et équidistant des deux bourrelets B. L'intersection de l'axe de référence 201 par le plan médian 211 détermine le centre du bandage pneumatique 200. On définira un repère cartésien au centre du bandage pneumatique 200 constitué de l'axe de référence 201, d'un axe vertical 203 perpendiculaire au sol et d'un axe longitudinal 202 perpendiculaire aux deux autres axes. Et, on définira le plan axial 212 passant par l'axe de référence 201 et l'axe longitudinal 202, parallèle au plan du sol et perpendiculaire au plan médian 211 Enfin on appellera plan vertical 213, le plan perpendiculaire à la fois au plan médian 211 et au plan axial 212 passant par l'axe vertical 203.

Tout point matériel du bandage pneumatique 100 est défini de façon unique par ses coordonnées cylindriques (Y, R, θ). Le scalaire Y représente la distance axiale au centre du bandage pneumatique 200 dans la direction de l'axe de référence 201 définie par la projection orthogonale du point matériel du pneumatique 100 sur l'axe de référence 201. On définira un plan radial 214 faisant un angle θ par rapport au plan vertical 213 autour de l'axe de référence 201. Le point matériel du bandage pneumatique 100 est repéré dans ce plan radial 214 par la distance R au centre du bandage pneumatique 200 dans la direction perpendiculaire à l'axe de référence 201 identifiée par la projection orthogonale de ce point matériel sur l'axe radial 204. Le vecteur unitaire perpendiculaire au plan radial 214 et formant un trièdre direct avec les vecteurs unitaire des directions axiale 201 et radiale 204 représente la direction circonférentielle de l'enveloppe pneumatique 100.

Ce pneumatique présente sur la surface radialement intérieure 130 un dispositif de retenue 510 qui est fixé sur la surface 130 par collage selon les techniques usuelles de l'état de la technique lorsque le dispositif de retenue est en matériau élastomère. Le dispositif de retenue 510 est fixé au droit du sommet S de l'enveloppe pneumatique 100, ce qui améliore son endurance puisque le dispositif de retenue 510 ainsi positionné procure moins de soucis lors des opérations de montage ou démontage de la roue sur l'enveloppe pneumatique 100. En effet, le dispositif de retenue 510 est situé dans une zone éloignée des bourrelets B de l'enveloppe pneumatique 100. Ici, le dispositif de retenue 510 est équipé d'un organe électronique 10 au sein de son volume ouvert qui constitue un logement adapté à recevoir l'organe électronique 10. De ce fait, l'enveloppe pneumatique 100 est ici prête à être monté sur une roue pour constituer un ensemble monté. L'organe électronique 10 peut délivrer diverses fonctions comme l'identification de certains composants comme l'organe électronique lui-même, le pneumatique.

Mais l'organe électronique 10 peut aussi être équipé d'un capteur de pression et/ou de température afin d'évaluer la pression de gonflage de l'ensemble monté. Enfin, il peut aussi être équipé de capteur évaluant la courbure de l'enveloppe pneumatique 10 comme un accéléromètre ou un flexomètre permettant de remonter à des grandeurs d'usage du pneumatique comme la vitesse angulaire, le kilométrage parcouru, la charge statique appliquée. Toute ou partie de ces grandeurs permet d'identifier des performances de l'enveloppe pneumatique comme par exemple, son usure, son adhérence ou des grandeurs intrinsèques du sol sur lequel l'enveloppe pneumatique 100 roule.

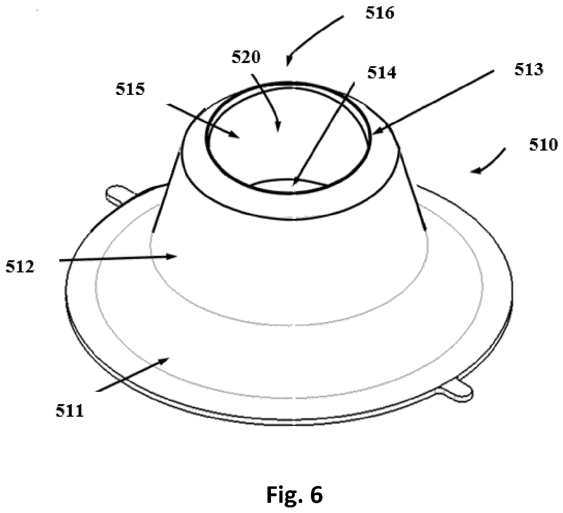

La Fig. 6 est une vue en perspective d'un dispositif de retenue 510 d'un organe électronique à une enveloppe pneumatique de l'état de la technique. Le dispositif de retenue 510 est ici de type ouvert, c'est-à-dire que l'insertion ou l'extraction de l'organe électronique 10 du dispositif de retenue 510 est réalisée par l'intermédiaire d'un orifice accessible même lorsque le dispositif de retenue 510 est fixé sur l'enveloppe pneumatique. De ce fait, les opérations d'insertion ou d'extraction de l'organe électronique 10 du dispositif de retenue 510 peuvent avoir lieu directement sur l'enveloppe pneumatique.

Ce dispositif de retenue 510 présente une semelle 511 dont la surface externe a pour fonction de se fixer à la surface d'une enveloppe pneumatique à l'aide de solutions techniques de l'état de l'art bien connu par l'Homme du métier. Le dispositif de retenue 510 est ici de révolution autour d'un axe de rotation perpendiculaire à la semelle 511. A cette semelle 511 est attenante une paroi de maintien 512, qui est fermée sur 360 degrés. Cette paroi de maintien 512 présente une ouverture 516 délimitée par un bord libre 513 de la paroi de maintien 512 du dispositif de fixation 510. L'orifice 516 ouvre sur un volume ouvert 520 délimité par la surface interne 514 de la semelle 511 et la surface interne 515 de la paroi de maintien 511. L'orifice 516 est déformable pour permettre l'insertion et l'extraction d'un organe électronique 10 du volume ouvert 520. La propriété élastique du matériau de cette paroi de maintien 512 autorise cet agrandissement de l'orifice 516 pour les phases d'insertion et d'extraction. De plus, elle assure aussi un effort de maintien ou de serrage sur l'organe électronique10 lorsque celui-ci est logé dans le volume ouvert 520.

## Revendications

1. Arrangement d'un organe électronique (10) et d'un dispositif de retenue (510) apte à être fixé à une paroi d'une enveloppe pneumatique, le dit dispositif de retenue (510) comprenant :
- une semelle (511) apte à être fixée à la paroi de l'enveloppe pneumatique par l'intermédiaire d'une surface externe,
- une paroi de maintien (512) fermée, apte à retenir le dit organe électronique (10), s'étendant depuis la semelle (511) jusqu'à un bord libre (513) et définissant avec ladite semelle (511) un volume ouvert (520) ,
- ledit volume (520) , apte à accueillir au moins une partie dudit organe électronique (10), étant défini par une surface interne (514) de ladite semelle (511) et par une surface interne (515) de ladite paroi de maintien (512), présentant une ouverture (516) délimitée par le bord libre (513) de ladite paroi de maintien (512), apte à se déformer pour introduire ou extraire ledit organe électronique (10) dudit volume (520) ;
ledit organe électronique (10) comprenant :
- un émetteur radioélectrique couplé à au moins une antenne radioélectrique ;
- un microprocesseur situé sur un circuit imprimé, couplé à l'émetteur radioélectrique et alimenté par une source d'énergie,
- un espace mémoire connecté au microprocesseur pour stocker au moins une information d'identification, et
- lesdits éléments sont encapsulés dans un boitier de protection (12) définissant une surface extérieure (30) circonscrite dans un cylindre (17) dont l'axe de révolution (15) est perpendiculaire au plan médian du circuit imprimé et délimité par deux plans parallèles (16, 16') ;
le dit boitier de protection (12) comporte sur sa surface la plus radialement extérieure (13) par rapport à l'axe de révolution (15) au moins un sillon (19ₐ, 19_{b}) s'étendant depuis une première extrémité (18ₐ, 18_{b}) qui est une extrémité de la surface la plus radialement extérieure (13) proximale de l'un des deux plans parallèles (16, 16') et sur une partie de la hauteur du cylindre (17) jusqu'à une seconde extrémité (18'ₐ, 18'_{b}), préférentiellement la seconde extrémité (18'ₐ, 18'_{b}) du au moins un sillon (19ₐ, 19_{b}) est une extrémité de la surface la plus radialement extérieure (13) proximale de l'autre plan parallèle (16, 16') ; **caractérisé en ce que** l'espace libre définie par la différence entre le volume (520) du dispositif de retenue (510) et la surface extérieure (30) du boîtier de protection (12) de l'organe électronique (10), comprenant le au moins un sillon (19), s'étend continument depuis la surface interne (514) de la semelle (511) du dispositif de retenue (510) jusqu'au bord libre (513) de la paroi de maintien (512) du dispositif de retenue (510).

2. Arrangement d'un organe électronique (10) et d'un dispositif de retenue (510) selon la revendication 1, dans lequel le boîtier de protection (12) comprend sur sa surface la plus radialement extérieure (13) N sillons (19ₐ, 19_{b}), N étant un nombre entier supérieur ou égal à 2.

3. Arrangement d'un organe électronique (10) et d'un dispositif de retenue (510) selon la revendication 2, dans lequel les N sillons (19ₐ, 19_{b}) sont également répartis le long du contour défini par la surface la plus radialement extérieure (13) du boîtier de protection (12).

4. Arrangement d'un organe électronique (10) et d'un dispositif de retenue (510) selon l'une quelconque des revendications précédentes, dans lequel le au moins un sillon (19ₐ, 19_{b}, 19_{c}, 19_{d}) présente, dans un plan perpendiculaire à la direction du sillon une largeur minimale au niveau de la surface la plus radialement extérieure (13) du boîtier de protection (12) supérieure ou égale à la profondeur minimale du au moins un sillon.

5. Arrangement d'un organe électronique (10) et d'un dispositif de retenue (510) selon la revendication précédente, dans lequel le au moins un sillon (19ₐ, 19_{b}, 19_{c}, 19_{d}) présente une section minimale dans le plan perpendiculaire à la direction du sillon (19ₐ, 19_{b}, 19_{c}, 19_{d}) d'au moins 0,04 mm², préférentiellement d'au moins 0,09 mm².

6. Arrangement d'un organe électronique (10) et d'un dispositif de retenue (510) selon l'une des revendications précédentes, dans lequel la surface la plus axialement extérieure (14) du boîtier de protection (12) se situant du côté de la première extrémité (18ₐ, 18_{b}) de la surface la plus radialement extérieure (13) présente au moins un canal principal (21, 21ₐ, 21_{b}) s'étendant depuis le au moins un sillon (19ₐ, 19_{b}, 19_{c}, 19_{d}) préférentiellement chaque surface la plus axialement extérieure (14, 14') du boitier de protection (12) présente au moins un canal principal (21, 21ₐ, 21_{b}) s'étendant depuis le au moins un sillon (19ₐ, 19_{b}, 19_{c}, 19_{d}).

7. Arrangement d'un organe électronique (10) et d'un dispositif de retenue (510) selon la revendication 6, dans lequel le boitier de protection (12) comprend, sur la surface la plus axialement extérieure (14), N canaux principaux (21ₐ, 21_{b},), N étant un nombre entier supérieur ou égal à 2.

8. Arrangement d'un organe électronique (10) et d'un dispositif de retenue (510) selon la revendication précédente, dans lequel les N canaux principaux (21ₐ, 21_{b}) délimitent la surface la plus axialement exterieure (14) du boitier de protection (12) en au moins N+1 surfaces égales.

9. Arrangement d'un organe électronique (10) et d'un dispositif de retenue (510) selon l'une des revendications 6 à 8, dans lequel le au moins un canal principal (21, 21ₐ, 21_{b}) présente, dans un plan perpendiculaire à la direction du canal principal, une largeur minimale au niveau de la surface la plus axialement extérieure (14) du boîtier de protection (12) supérieure ou égale à la profondeur minimale du canal principal.

10. Arrangement d'un organe électronique (10) et d'un dispositif de retenue (510) selon la revendication précédente, dans lequel le au moins un canal principal (21, 21ₐ, 21_{b}) présente une section minimale dans le plan perpendiculaire à la direction du canal principal d'au moins 0,04 mm2, préférentiellement d'au moins 0,09 mm2.

11. Arrangement d'un organe électronique (10) et d'un dispositif de retenue (510) selon l'une des revendications 7 à 10 dans lequel le boitier de protection (12) comprend sur la surface la plus axialement extérieure (14) au moins un canal secondaire reliant entre eux deux canaux principaux disjoints.

12. Arrangement d'un organe électronique (10) et d'un dispositif de retenue (510) selon la revendication 11, dans lequel le au moins un canal secondaire présente, dans un plan perpendiculaire à la direction du canal secondaire une largeur minimale au niveau de la surface la plus axialement extérieure (14) du boîtier de protection (12) supérieure ou égale à la profondeur minimale du canal secondaire , préférentiellement la section minimale, définie par la largeur minimale et la profondeur minimale du au moins un canal secondaire, est d'au moins 0,04 mm2.

13. Arrangement selon l'une des revendications précédentes dans lequel ladite paroi de maintien (512) du dispositif de retenue (510) présente sur la surface interne (515) au moins un canal s'étendant depuis la surface interne de la semelle (511) jusqu'au bord libre (513), préférentiellement, au moins une partie du au moins un canal du dispositif de retenue (510) se situe en vis-à-vis du au moins un sillon (19ₐ, 19_{b}, 19_{c}, 19_{d}) de l'organe électronique (10).

14. Ensemble comprenant un arrangement selon l'une des revendication 1 à 14 et une enveloppe pneumatique (100), comprenant un sommet (S), deux flancs (F) s'étendant depuis le sommet (S) et se terminant par deux bourrelets (B) aptes à être liés à une roue, dans lequel le dispositif de retenue (510) est fixé sur l'une des surfaces (130, 140) de l'enveloppe pneumatique (100), préférentiellement sur la surface radialement intérieure (130) de l'enveloppe pneumatique (100).

15. Ensemble selon la revendication précédente dans lequel le dispositif de retenue (510) est fixé sur la surface radialement intérieure (130) du pneumatique (100) et au droit du sommet (S) de l'enveloppe pneumatique (100).

## Patentansprüche

1. Anordnung eines elektronischen Elements (10) und einer Haltevorrichtung (510), die an einer Wand eines Luftreifens befestigbar ist, wobei die Haltevorrichtung (510) Folgendes beinhaltet:
- eine Sohle (511), die über eine Außenfläche an der Wand des Luftreifens befestigbar ist,
- eine geschlossene Haltewand (512), die geeignet ist, das elektronische Element (10) zu halten, sich von der Sohle (511) bis zu einem freien Rand (513) erstreckt und mit der Sohle (511) ein offenes Volumen (520) definiert,
- das Volumen (520), das geeignet ist, wenigstens einen Teil des elektronischen Elements (10) aufzunehmen, durch eine Innenfläche (514) der Sohle (511) und durch eine Innenfläche (515) der Haltewand (512) definiert ist und eine von dem freien Rand (513) der Haltewand (512) begrenzte Öffnung (516) aufweist, die geeignet ist, sich zu verformen, um das elektronische Element (10) in das Volumen (520) einzuführen oder aus ihm herauszuziehen;
wobei das elektronische Element (10) Folgendes beinhaltet:
- einen Funksender, der mit wenigstens einer Funkantenne gekoppelt ist;
- einen Mikroprozessor, der sich auf einer Leiterplatte befindet, mit dem Funksender gekoppelt ist und durch eine Energiequelle versorgt wird,
- einen Speicherraum, der mit dem Mikroprozessor verbunden ist, um wenigstens eine Identifikationsinformation zu speichern, und
- die Elemente sind in einem Schutzgehäuse (12) eingekapselt, das eine Außenfläche (30) definiert, die in einen Zylinder (17) eingeschrieben ist, dessen Drehachse (15) zu der Mittelebene der Leiterplatte senkrecht ist und der durch zwei parallele Ebenen (16, 16') begrenzt wird;
das Schutzgehäuse (12) umfasst auf seiner in Bezug auf die Drehachse (15) radial äußersten Fläche (13) wenigstens eine Rille (19ₐ, 19_{b}), die sich von einem ersten Ende (18ₐ, 18_{b}), welches ein Ende der radial äußersten Fläche (13) proximal zu einer der zwei parallelen Ebenen (16, 16') ist, und über einen Teil der Höhe des Zylinders (17) bis zu einem zweiten Ende (18'ₐ, 18'_{b}) erstreckt, vorzugsweise ist das zweite Ende (18'ₐ, 18'_{b}) der wenigstens einen Rille (19ₐ, 19_{b}) ein Ende der radial äußersten Fläche (13) proximal zu der anderen parallelen Ebene (16, 16'); **dadurch gekennzeichnet,**
**dass** der Freiraum, der durch die Differenz zwischen dem Volumen (520) der Haltevorrichtung (510) und der Außenfläche (30) des Schutzgehäuses (12) des elektronischen Elements (10), die die wenigstens eine Rille (19) beinhaltet, definiert ist, sich kontinuierlich von der Innenfläche (514) der Sohle (511) der Haltevorrichtung (510) bis zu dem freien Rand (513) der Haltewand (512) der Haltevorrichtung (510) erstreckt.

2. Anordnung eines elektronischen Elements (10) und einer Haltevorrichtung (510) nach Anspruch 1, wobei das Schutzgehäuse (12) auf seiner radial äußersten Fläche (13) N Rillen (19ₐ, 19_{b}) beinhaltet, wobei N eine ganze Zahl größer als oder gleich 2 ist.

3. Anordnung eines elektronischen Elements (10) und einer Haltevorrichtung (510) nach Anspruch 2, wobei die N Rillen (19ₐ, 19_{b}) entlang der durch die radial äußerste Fläche (13) des Schutzgehäuses (12) definierten Kontur gleichmäßig verteilt sind.

4. Anordnung eines elektronischen Elements (10) und einer Haltevorrichtung (510) nach einem der vorhergehenden Ansprüche, wobei die wenigstens eine Rille (19ₐ, 19_{b}, 19_{c}, 19_{d}) in einer zu der Richtung der Rille senkrechten Ebene eine minimale Breite an der radial äußersten Fläche (13) des Schutzgehäuses (12) aufweist, die größer als oder gleich der minimalen Tiefe der wenigstens einen Rille ist.

5. Anordnung eines elektronischen Elements (10) und einer Haltevorrichtung (510) nach dem vorhergehenden Anspruch, wobei die wenigstens eine Rille (19ₐ, 19_{b}, 19_{c}, 19_{d}) in der zu der Richtung der Rille (19ₐ, 19_{b}, 19_{c}, 19_{d}) senkrechten Ebene einen minimalen Querschnitt von wenigstens 0,04 mm², vorzugsweise von wenigstens 0,09 mm², aufweist.

6. Anordnung eines elektronischen Elements (10) und einer Haltevorrichtung (510) nach einem der vorhergehenden Ansprüche, wobei die axial äußerste Fläche (14) des Schutzgehäuses (12), die sich auf der Seite des ersten Endes (18ₐ, 18_{b}) der radial äußersten Fläche (13) befindet, wenigstens einen Hauptkanal (21, 21ₐ, 21_{b}) aufweist, der sich von der wenigstens einen Rille (19ₐ, 19_{b}, 19_{c}, 19_{d}) erstreckt, vorzugsweise jede axial äußerste Fläche (14, 14') des Schutzgehäuses (12) wenigstens einen Hauptkanal (21, 21ₐ, 21_{b}) aufweist, der sich von der wenigstens einen Rille (19ₐ, 19_{b}, 19_{c}, 19_{d}) erstreckt.

7. Anordnung eines elektronischen Elements (10) und einer Haltevorrichtung (510) nach Anspruch 6, wobei das Schutzgehäuse (12) auf der axial äußersten Fläche (14) N Hauptkanäle (21ₐ, 21_{b}) beinhaltet, wobei N eine ganze Zahl größer als oder gleich 2 ist.

8. Anordnung eines elektronischen Elements (10) und einer Haltevorrichtung (510) nach dem vorhergehenden Anspruch, wobei die N Hauptkanäle (21ₐ, 21_{b}) die axial äußerste Fläche (14) des Schutzgehäuses (12) in wenigstens N+1 gleiche Flächen unterteilen.

9. Anordnung eines elektronischen Elements (10) und einer Haltevorrichtung (510) nach einem der Ansprüche 6 bis 8, wobei der wenigstens eine Hauptkanal (21, 21ₐ, 21_{b}) in einer zu der Richtung des Hauptkanals senkrechten Ebene eine minimale Breite an der axial äußersten Fläche (14) des Schutzgehäuses (12) aufweist, die größer als oder gleich der minimalen Tiefe des Hauptkanals ist.

10. Anordnung eines elektronischen Elements (10) und einer Haltevorrichtung (510) nach dem vorhergehenden Anspruch, wobei der wenigstens eine Hauptkanal (21, 21ₐ, 21_{b}) in der zu der Richtung des Hauptkanals senkrechten Ebene einen minimalen Querschnitt von wenigstens 0,04 mm2, vorzugsweise von wenigstens 0,09 mm2, aufweist.

11. Anordnung eines elektronischen Elements (10) und einer Haltevorrichtung (510) nach einem der Ansprüche 7 bis 10, wobei das Schutzgehäuse (12) auf der axial äußersten Fläche (14) wenigstens einen sekundären Kanal beinhaltet, der zwei disjunkte Hauptkanäle miteinander verbindet.

12. Anordnung eines elektronischen Elements (10) und einer Haltevorrichtung (510) nach Anspruch 11, wobei der wenigstens eine sekundäre Kanal in einer zu der Richtung des sekundären Kanals senkrechten Ebene eine minimale Breite an der axial äußersten Fläche (14) des Schutzgehäuses (12) aufweist, die größer als oder gleich der minimalen Tiefe des sekundären Kanals ist, vorzugsweise der minimale Querschnitt, der durch die minimale Breite und die minimale Tiefe des wenigstens einen sekundären Kanals definiert ist, wenigstens 0,04 mm2 beträgt.

13. Anordnung nach einem der vorhergehenden Ansprüche, wobei die Haltewand (512) der Haltevorrichtung (510) auf der Innenfläche (515) wenigstens einen Kanal aufweist, der sich von der Innenfläche der Sohle (511) bis zu dem freien Rand (513) erstreckt, sich vorzugsweise wenigstens ein Teil des wenigstens einen Kanals der Haltevorrichtung (510) gegenüber der wenigstens einen Rille (19ₐ, 19_{b}, 19_{c}, 19_{d}) des elektronischen Elements (10) befindet.

14. Einheit, beinhaltend eine Anordnung nach einem der Ansprüche 1 bis 14 und einen Luftreifen (100), der einen Scheitel (S) und zwei Seitenwände (F) beinhaltet, welche sich von dem Scheitel (S) aus erstrecken und mit zwei Wülsten (B) enden, die mit einem Rad verbindbar sind, wobei die Haltevorrichtung (510) an einer der Flächen (130, 140) des Luftreifens (100), vorzugsweise an der radial inneren Fläche (130) des Luftreifens (100), befestigt ist.

15. Einheit nach dem vorhergehenden Anspruch, wobei die Haltevorrichtung (510) an der radial inneren Fläche (130) des Reifens (100) und direkt unter dem Scheitel (S) des Luftreifens (100) befestigt ist.

## Claims

1. Arrangement of an electronic member (10) and a retaining device (510) that is able to be secured to a wall of a tyre casing, said retaining device (510) comprising:
- a base (511) that is able to be secured to the wall of the tyre casing via an external surface,
- a closed retaining wall (512), which is able to retain said electronic member (10), extending from the base (511) as far as a free edge (513) and defining an open volume (520) with said base (511),
- said volume (520), which is able to accommodate at least a part of said electronic member (10), being defined by an internal surface (514) of said base (511) and by an internal surface (515) of said retaining wall (512), having an opening (516) delimited by the free edge (513) of said retaining wall (512), which is able to deform for the insertion or extraction of said electronic member (10) into or from said volume (520);
said electronic member (10) comprising:
- a radio transmitter coupled to at least one radio antenna;
- a microprocessor situated on a printed circuit, coupled to the radio transmitter and powered by an energy source,
- a memory space connected to the microprocessor to store at least one item of identification information, and
- said elements are encapsulated in a protective housing (12) defining an outer surface (30) circumscribed in a cylinder (17) of which the axis of revolution (15) is perpendicular to the median plane of the printed circuit and delimited by two parallel planes (16, 16');
said protective housing (12) has, on its radially outermost surface (13) with respect to the axis of revolution (15), at least one groove (19ₐ, 19_{b}) extending from a first end (18ₐ, 18_{b}), which is an end of the radially outermost surface (13) that is proximal to one of the two parallel planes (16, 16'), and over a part of the height of the cylinder (17) as far as a second end (18'ₐ, 18'_{b}), preferentially the second end (18'ₐ, 18'_{b}) of the at least one groove (19ₐ, 19_{b}) is an end of the radially outermost surface (13) that is proximal to the other parallel plane (16, 16'); **characterized**
**in that** the free space defined by the difference between the volume (520) of the retaining device (510) and the outer surface (30) of the protective housing (12) of the electronic member (10), comprising the at least one groove (19), extends continuously from the internal surface (514) of the base (511) of the retaining device (510) as far as the free edge (513) of the retaining wall (512) of the retaining device (510).

2. Arrangement of an electronic member (10) and a retaining device (510) according to Claim 1, wherein the protective housing (12) comprises, on its radially outermost surface (13), N grooves (19ₐ, 19_{b}), N being an integer greater than or equal to 2.

3. Arrangement of an electronic member (10) and a retaining device (510) according to Claim 2, wherein the N grooves (19ₐ, 19_{b}) are evenly distributed along the contour defined by the radially outermost surface (13) of the protective housing (12).

4. Arrangement of an electronic member (10) and a retaining device (510) according to any one of the preceding claims, wherein the at least one groove (19ₐ, 19_{b}, 19_{c}, 19_{d}) has, in a plane perpendicular to the direction of the groove, a minimum width at the radially outermost surface (13) of the protective housing (12) that is greater than or equal to the minimum depth of the at least one groove.

5. Arrangement of an electronic member (10) and a retaining device (510) according to the preceding claim, wherein the at least one groove (19ₐ, 19_{b}, 19_{c}, 19_{d}) has a minimum section in the plane perpendicular to the direction of the groove (19ₐ, 19_{b}, 19_{c}, 19_{d}) of at least 0.04 mm², preferentially at least 0.09 mm².

6. Arrangement of an electronic member (10) and a retaining device (510) according to one of the preceding claims, wherein the axially outermost surface (14) of the protective housing (12), which is situated on the side of the first end (18ₐ, 18_{b}) of the radially outermost surface (13), has at least one main channel (21, 21ₐ, 21_{b}) extending from the at least one groove (19ₐ, 19_{b}, 19_{c}, 19_{d}), preferentially each axially outermost surface (14, 14') of the protective housing (12) has at least one main channel (21, 21ₐ, 21_{b}) extending from the at least one groove (19ₐ, 19_{b}, 19_{c}, 19_{d}).

7. Arrangement of an electronic member (10) and a retaining device (510) according to Claim 6, wherein the protective housing (12) comprises, on the axially outermost surface (14), N main channels (21ₐ, 21_{b}), N being an integer greater than or equal to 2.

8. Arrangement of an electronic member (10) and a retaining device (510) according to the preceding claim, wherein the N main channels (21ₐ, 21_{b}) divide the axially outermost surface (14) of the protective housing (12) into at least N+1 equal surfaces.

9. Arrangement of an electronic member (10) and a retaining device (510) according to one of Claims 6 to 8, wherein the at least one main channel (21, 21ₐ, 21_{b}) has, in a plane perpendicular to the direction of the main channel, a minimum width at the axially outermost surface (14) of the protective housing (12) that is greater than or equal to the minimum depth of the main channel.

10. Arrangement of an electronic member (10) and a retaining device (510) according to the preceding claim, wherein the at least one main channel (21, 21ₐ, 21_{b}) has a minimum section in the plane perpendicular to the direction of the main channel of at least 0.04 mm2, preferentially at least 0.09 mm2.

11. Arrangement of an electronic member (10) and a retaining device (510) according to one of Claims 7 to 10, wherein the protective housing (12) comprises, on the axially outermost surface (14), at least one secondary channel connecting two separate main channels to each other.

12. Arrangement of an electronic member (10) and a retaining device (510) according to Claim 11, wherein the at least one secondary channel has, in a plane perpendicular to the direction of the secondary channel, a minimum width at the axially outermost surface (14) of the protective housing (12) that is greater than or equal to the minimum depth of the secondary channel, preferentially the minimum section, defined by the minimum width and minimum depth of the at least one secondary channel, is at least 0.04 mm2.

13. Arrangement according to one of the preceding claims, wherein said retaining wall (512) of the retaining device (510) has, on the internal surface (515), at least one channel extending from the internal surface of the base (511) as far as the free edge (513), preferentially at least a part of the at least one channel of the retaining device (510) is situated facing the at least one groove (19ₐ, 19_{b}, 19_{c}, 19_{d}) of the electronic member (10).

14. Assembly comprising an arrangement according to one of Claims 1 to 14 and a tyre casing (100), comprising a crown (S), two sidewalls (F) extending from the crown (S) and terminating in two beads (B) that are able to be connected to a wheel, wherein the retaining device (510) is secured to one of the surfaces (130, 140) of the tyre casing (100), preferentially to the radially inner surface (130) of the tyre casing (100).

15. Assembly according to the preceding claim, wherein the retaining device (510) is secured to the radially inner surface (130) of the tyre (100) and in line with the crown (S) of the tyre casing (100).
